# EUROPÄISCHE PATENTSCHRIFT

(11) **EP 3 377 869 B1**
(45) Veröffentlichungstag und Bekanntmachung des Hinweises auf die Patenterteilung: **16.10.2019**
(21) Anmeldenummer: 16791525.5
(22) Anmeldetag: 04.11.2016
(51) Int. Cl.: B25J 11/00, G01M 3/26, G01M 3/28, B25J 19/00

(54) **ÜBERDRUCKKAPSELUNGSSYSTEM ZUM EXPLOSIONSSCHUTZ UND ENTSPRECHENDES BETRIEBSVERFAHREN**
OVERPRESSURE ENCAPSULATION SYSTEM FOR EXPLOSION PROTECTION, AND CORRESPONDING OPERATING METHOD
SYSTÈME D'ENCAPSULAGE À SURPRESSION POUR LA PROTECTION ANTI-EXPLOSION ET PROCÉDÉ DE FONCTIONNEMENT CORRESPONDANT

(30) Priorität: 20.11.2015 DE 102015015089
(43) Veröffentlichungstag der Anmeldung: 26.09.2018
(73) Patentinhaber: Dürr Systems AG, 74321 Bietigheim-Bissingen (DE)
(72) Erfinder: HÄCKER, Jens, 71706 Markgröningen (DE); CARLS, Alexander, 71083 Herrenberg (DE)
(74) Vertreter: v. Bezold & Partner Patentanwälte - PartG mbB
(86) Internationale Anmeldenummer: PCT/EP2016/001831
(87) Internationale Veröffentlichungsnummer: WO 2017/084743

(56) Entgegenhaltungen:
- JP-A- 2013 111 697

## Beschreibung

Die Erfindung betrifft ein Überdruckkapselungssystem zum Explosionsschutz, insbesondere in einer Lackieranlage zur Lackierung von Kraftfahrzeugkarosseriebauteilen. Weiterhin betrifft die Erfindung ein entsprechendes Betriebsverfahren für ein solches Überdruckkapselungssystem.

Beim Betrieb von Geräten (z.B. Lackierrobotern, elektropneumatischen Schaltgerätekombinationen) in explosionsgefährdeten Bereichen (z.B. Lackierkabinen) müssen die Geräte explosionsgeschützt sein. Eine Möglichkeit hierzu besteht in einer Überdruckkapselung der Geräte, wobei die Geräte in einem überdruckgekapselten Gerätegehäuse untergebracht werden, das durch dauerhaften Überdruck mit Luft vor dem Eindringen eines explosionsfähigen Gasgemisches aus der explosionsgefährdeten Umgebung in das Gehäuse geschützt wird. Derartige Überdrucckapselungssysteme sind auch in der technischen Norm DIN EN 60079-2 normiert. Ein konkretes Ausführungsbeispiel für ein solches Überdruckkapselungssystem ist auch in WO 2007/074416 A2 beschrieben. Dieses bekannte Überdruckkapselungssystem ermöglicht auch Messungen von Druck und Volumenstrom an einem Gehäuseauslass, wobei aus den Messwerten auf eine mögliche Leckage des Gerätegehäuses geschlossen werden kann.

Ein Nachteil dieses bekannten Überdruckkapselungssystems besteht darin, dass nur eine aktuelle Leckage des Gerätegehäuses erkannt werden kann, was dann eine sofortige Wartungsmaßnahme und eine Geräteabschaltung erfordert. Es wäre dagegen wünschenswert, bei einer beginnenden Leckage des überdruckgekapselten Gerätegehäuses frühzeitig zu erkennen, wann die Leckage zu einem Systemausfall führt, damit dann rechtzeitig und zeitlich geplant Wartungsmaßnahmen durchgeführt werden können. Diese frühzeitige Erkennung der erforderlichen Wartungsmaßnahme würde dann auch eine Eintaktung der Wartungsmaßnahme in den normalen Betriebsablauf ermöglichen.

Ein weiterer Nachteil des bekannten Überdruckkapselungssystems rührt daher, dass in dem überdruckgekapselten Gerätegehäuse ein Druckluftsystem angeordnet ist, das beispielsweise bei einem Lackierroboter zum Betrieb des Lackierroboters oder der Applikationstechnik dient. Dieses Druckluftsystem kann beispielsweise Druckluftschläuche und Steuerventile enthalten. Bei diesem Druckluftsystem in dem überdruckgekapselten Gerätegehäuse kann es ebenfalls zu Fehlerfällen kommen, wie beispielsweise einer kontinuierlichen Leckage aus dem Druckluftsystem oder einer sprunghaften Leckage aus dem Druckluftsystem, beispielsweise beim Abreißen oder Bersten eines Druckluftschlauchs. Derartige Fehlerfälle des Druckluftsystems in dem überdruckgekapselten Gerätegehäuse können bisher nur anhand einer Verschlechterung der Produktionsqualität oder eines Systemausfalls erkannt werden.

Zum Stand der Technik ist auch hinzuweisen auf DE 10 2014 109 731 A1. Diese Veröffentlichung beschreibt - wie auch die bereits zitierte Druckschrift WO 2007/074416 A2 - einen herkömmlichen Roboter mit einer Explosionsschutzkapselung, die mit einem Schutzgas gespült werden kann. Allerdings ist hierbei innerhalb der Explosionsschutzkapselung kein Druckluftsystem angeordnet, das zum Betrieb des Roboters dient und fehlerhaft werden kann.

Schließlich ist zum allgemeinen technischen Hintergrund der Erfindung auch hinzuweisen auf JP H05-115 111 A. Diese Druckschrift ist jedoch gattungsfremd, da sie lediglich einen gasdichten Transformator beschreibt.

Aus JP 2013 111697 A sind ein Überdruckkapselungssystem gemäß dem Oberbegriff von Anspruch 1 und ein Betriebsverfahren gemäß dem Oberbegriff von Anspruch 13 bekannt. Dieser bekannte Stand der Technik weist jedoch ebenfalls die vorstehend genannten Nachteile auf.

Der Erfindung liegt deshalb die Aufgabe zugrunde, das vorstehend beschriebene bekannte Überdruckkapselungssystem entsprechend zu verbessern. Weiterhin liegt der Erfindung die Aufgabe zugrunde, ein entsprechend verbessertes Betriebsverfahren für ein solches Überdruckkapselungssystem zu schaffen.

Diese Aufgabe wird durch ein erfindungsgemäßes Überdruckkapselungssystem bzw. ein entsprechendes Betriebsverfahren gemäß den Nebenansprüchen gelöst.

Das erfindungsgemäße Überdruckkapselungssystem zum Explosionsschutz weist zunächst in Übereinstimmung mit dem Stand der Technik ein Gerät auf, wie beispielsweise einen Lackierroboter oder eine elektropneumatische Schaltgerätekombination. Die Erfindung ist jedoch hinsichtlich des Typs des zu schützenden Geräts nicht auf Lackierroboter und elektropneumatische Schaltgerätekombinationen beschränkt, sondern auch mit anderen Gerätetypen realisierbar.

Hierbei ist zu erwähnen, dass das Gerät ein Gerätegehäuse mit einer Überdruckkapselung aufweist, um einen Explosionsschutz für das Gerät zu erzielen, insbesondere gemäß der technischen Norm DIN EN 60079-2. Eine derartige Überdruckkapselung für ein Gerätegehäuse ist an sich aus dem Stand der Technik bekannt und muss deshalb nicht näher beschrieben werden.

In dem Gerätegehäuse befindet sich ein Gehäuseauslass zur Ableitung von Gas aus dem Gerätegehäuse in die Umgebung. Dies ist beispielsweise wichtig, wenn das Gerätegehäuse vor dem Betriebsbeginn mit einem nicht explosionsfähigen Gas (z.B. Druckluft, Inertgas) gespült wird, um eine möglicherweise zündfähige Atmosphäre aus dem Innenraum des Gerätegehäuses zu entfernen, wobei die möglicherweise zündfähige Atmosphäre durch den Gehäuseauslass aus dem Gerätegehäuse entweicht. Ein solcher Spülvorgang durch den Gehäuseauslass ist an sich aus dem Stand der Technik ebenfalls bekannt.

Darüber hinaus umfasst das erfindungsgemäße Überdruckkapselungssystem in Übereinstimmung mit dem Stand der Technik ein Druckluftsystem, das mindestens teilweise innerhalb des überdruckgekapselten Gerätegehäuses angeordnet ist und zum Betrieb des Gerätes dient. Beispielsweise kann das Druckluftsystem pneumatisch angesteuerte Beschichtungsmittelventile zur Steuerung eines Beschichtungsmittelstroms aufweisen. Das vorstehende ist für das erfindungsgemäße System nicht notwendig. Es ist richtig, dass diese Elemente vorhanden sind, diese haben jedoch keinen Einfluss auf die Leckageerkennung.

Weiterhin kann das Druckluftsystem ein Steuerventil zur Steuerung eines Druckluftstroms aufweisen, beispielsweise zur Ansteuerung eines pneumatisch angesteuerten Beschichtungsmittelventils. Ferner kann das Druckluftsystem in dem überdruckgekapselten Gerätegehäuse eine Druckluftleitung (z.B. Druckluftschlauch) aufweisen, um einen Druckluftstrom durchzuleiten. Allgemein kann das Druckluftsystem zur Ansteuerung der Applikationstechnik des Lackierroboters dienen. Auch derartige Druckluftsysteme sind beispielsweise von herkömmlichen Lackierrobotern hinlänglich bekannt und müssen deshalb im Einzelnen nicht näher beschrieben werden.

Ferner umfasst das erfindungsgemäße Überdruckkapselungssystem eine Sensoranordnung zur Messung einer Fluidgröße (z.B. Druck, Volumenstrom) in dem Gerätegehäuse, an dem Gehäuseauslass und/oder in der Umgebung. Derartige Sensoranordnungen zur Messung von Druck bzw. Volumenstrom an einem überdruckgekapselten Gerätegehäuse sind aus dem Stand der Technik ebenfalls hinlänglich bekannt und müssen deshalb im Einzelnen nicht näher beschrieben werden.

Darüber hinaus umfasst das erfindungsgemäße Überdruckkapselungssystem in Übereinstimmung mit dem Stand der Technik eine Auswertungseinheit, die eingangsseitig mit der Sensoranordnung verbunden ist und die von der Sensoranordnung gemessene Fluidgröße auswertet, insbesondere zur Erkennung einer Leckage des Gerätegehäuses.

Insoweit sind die Merkmale des erfindungsgemäßen Überdrucckapselungssystems bereits aus dem eingangs beschriebenen Stand der Technik bekannt. Die Erfindung zeichnet sich gegenüber dem Stand der Technik nun durch eine bessere Auswertung der gemessenen Fluidgröße aus, um daraus weitere Informationen zu gewinnen.

In einer Erfindungsvariante ermittelt die Auswertungseinheit bei einer beginnenden Leckage des überdruckgekapselten Gerätegehäuses in Abhängigkeit von der gemessenen Fluidgröße eine Restlaufzeit bis zu einer erforderlichen Wartungsmaßnahme oder bis zu einem Systemausfall. Hierbei ist zu erwähnen, dass die Auswertungseinheit in der Druckschrift WO 2007/074416 A2 nur eine aktuelle Leckage erkennen kann, was dann eine sofortige Geräteabschaltung und eine anschließende Wartungsmaßnahme erforderlich macht. Dies ist jedoch im laufenden Betrieb beispielsweise eines Lackierroboters nachteilig, weil dann der Betrieb einer kompletten Lackierstraße unterbrochen werden muss, was mit sehr hohen Kosten verbunden ist. Im Gegensatz dazu ermöglicht dieser Erfindungsgedanke nun eine frühzeitige Erkennung einer beginnenden Leckage und zwar zu einem Zeitpunkt, zu dem noch keine Wartungsmaßnahme und keine Systemabschaltung erforderlich ist. Die Wartungsmaßnahme (z.B. Abdichtung des überdruckgekapselten Gerätegehäuses) kann dann zeitlich in einer Produktionspause terminiert werden, beispielsweise am Wochenende, so dass der normale Lackierbetrieb einer Lackierstraße kaum beeinträchtigt wird.

In einer anderen Erfindungsvariante wertet die Auswertungseinheit die gemessene Fluidgröße nicht oder nicht nur aus, um daraus einen Rückschluss zu ziehen auf eine mögliche Leckage des überdruckgekapselten Gerätegehäuses. Vielmehr leitet die Auswertungseinheit aus der gemessenen Fluidgröße Informationen über den Zustand des Druckluftsystems ab, um einen Fehler des Druckluftsystems (z.B. Ablösen oder Bersten eines Druckluftschlauchs) zu erkennen. So führt beispielsweise eine Ablösung oder ein Bersten eines Druckluftschlauchs des Druckluftsystems dazu, dass Druckluft aus dem Druckluftsystem in das überdruckgekapselte Gerätegehäuse entweicht, was von der Sensoranordnung erkannt werden kann. Beispielsweise führt ein plötzlicher Druckluftaustritt aus dem Druckluftsystem in das überdruckgekapselte Gerätegehäuse zu einem entsprechend plötzlichen Anstieg des Volumenstroms durch den Gehäuseauslass in die Umgebung, was von der Sensoranordnung erkannt werden kann. Das erfindungsgemäße Überdruckkapselungssystem ermöglicht also vorteilhaft eine Erkennung und Unterscheidung verschiedener Fehlerfälle des Druckluftsystems in dem Überdruckkapselungssystem. Bisher konnten solche Fehler des Druckluftsystems nur erkannt werden, wenn es zu Veränderungen der Produktionsqualität oder zu Gesamtausfällen des Systems kam. Darüber hinaus war es bisher nur mit sehr großem Aufwand möglich, verschiedene Fehlerfälle (z.B. Bersten oder Ablösen eines Druckluftschlauchs oder Undichtigkeit des Druckluftsystems) des Druckluftsystems zu unterscheiden. So war es zur Erkennung der Fehlerursache bisher notwendig, das überdruckgekapselte Gerätegehäuse (z.B. Robotergehäuse) zu öffnen, was arbeitsaufwändig ist und eine Produktionsunterbrechung erforderlich macht.

In einem bevorzugten Ausführungsbeispiel der Erfindung berücksichtigt die Auswertungseinheit den Volumenstrom des Gases aus dem überdruckgekapselten Gerätegehäuse durch den Gehäuseauslass in die Umgebung als die auszuwertende Fluidgröße für die Ermittlung der Restlaufzeit oder für die Erkennung eines Fehlers des Druckluftsystems. Die Erfindung ist jedoch nicht auf Ausführungsformen beschränkt, bei denen nur der Volumenstrom durch den Gehäuseauslass als informationshaltige Fluidgröße berücksichtigt wird. Es ist vielmehr im Rahmen der Erfindung auch möglich, dass anstelle des Volumenstroms oder zusätzlich zu dem Volumenstrom weitere Fluidgrößen gemessen und berücksichtigt werden, wie beispielsweise der Innendruck innerhalb des Gerätegehäuses, der Umgebungsdruck außerhalb des Gerätegehäuses oder weitere Fluidgrößen.

Darüber hinaus besteht im Rahmen der Erfindung die Möglichkeit, dass der Volumenstrom als informationshaltige Fluidgröße aus dem Innendruck und dem Umgebungsdruck abgeleitet wird. In dieser Erfindungsvariante weist die Sensoranordnung deshalb einen Innendrucksensor auf, der den Innendruck innerhalb des Gerätegehäuses misst, sowie einen Umgebungsdrucksensor, der den Umgebungsdruck außerhalb des Gerätegehäuses misst. Die Auswertungseinheit kann dann aus dem gemessenen Innendruck und dem gemessenen Umgebungsdruck den Volumenstrom durch den Gehäuseauslass in die Umgebung berechnen und dann als informationshaltige Fluidgröße berücksichtigen.

Alternativ besteht jedoch auch die Möglichkeit, dass die Sensoranordnung einen Volumenstromsensor aufweist, der direkt den Volumenstrom des Gases durch den Gehäuseauslass misst. In diesem Fall muss der Volumenstrom dann nicht aus dem Innendruck und dem Umgebungsdruck berechnet werden. Falls jedoch zusätzlich ein Innendrucksensor und ein Umgebungsdrucksensor vorgesehen sind, so besteht die Möglichkeit einer Plausibilitätskontrolle. Aus dem Innendruck und dem Umgebungsdruck kann dann nämlich ein Volumenstromwert berechnet werden, der mit dem Volumenstromwert verglichen wird, der direkt von dem Volumenstromsensor gemessen wird. Durch diese Plausibilitätskontrolle können Messfehler des Innendrucksensors, des Umgebungsdrucksensors bzw. des Volumenstromsensors erkannt werden.

Ferner ist es zu erwähnen, dass die Sensoranordnung vorzugsweise ein quantitatives Sensorsignal der mindestens einen gemessenen Fluidgröße (z.B. Volumenstrom, Innendruck, Umgebungsdruck) ausgibt. Dies bedeutet, dass die Sensoranordnung nicht nur ein qualitatives Sensorsignal ausgibt, welches lediglich das Überschreiten bzw. Unterschreiten eines Grenzwertes anzeigt. Vielmehr gibt das quantitative Sensorsignal dann einen kontinuierlichen Messwert aus.

Bei dem erfindungsgemäßen Überdruckkapselungssystem kann in dem Gehäuseauslass ein Ventil angeordnet sein, insbesondere ein steuerbares Absperrventil. Dies kann vorteilhaft sein, um die Dichtigkeit des Überdruckkapselungssystems bei definierten Drücken sicherzustellen oder zu überprüfen.

Es wurde bereits vorstehend erwähnt, dass es in einer Erfindungsvariante möglich ist, bei einer beginnenden Leckage des überdruckgekapselten Systems die Restlaufzeit bis zu der notwendigen Wartungsmaßnahme oder bis zu dem Systemausfall zu berechnen. Hierbei ist zu erwähnen, dass die Fluidgröße bei einer Leckage des überdruckgekapselten Gerätegehäuses üblicherweise einem vorgegebenen zeitlichen Verlauf folgt, der beispielsweise linear ist und in der Auswertungseinheit hinterlegt werden kann. Die Auswertungseinheit misst dann den tatsächlichen zeitlichen Verlauf der gemessenen Fluidgröße. Aus dem hinterlegten zeitlichen (theoretischen) Verlauf der Fluidgröße und dem gemessenen zeitlichen (tatsächlichen) Verlauf kann die Auswertungseinheit dann die Restlaufzeit bis zu der erforderlichen Wartungsmaßnahme oder bis zu dem Systemausfall berechnen.

Beispielsweise kann die Auswertungseinheit hierzu einen statistischen Trend der gemessenen Fluidgröße berechnen. Anschließend kann die Auswertungseinheit dann einen Schnittpunkt berechnen zwischen dem statistischen Trend der gemessenen Fluidgröße und einem vorgegebenen Grenzwert für die Fluidgröße. Die Restlaufzeit ist dann die verbleibende Zeit bis zum Erreichen des Schnittpunktes zwischen dem statistischen Trend und dem vorgegebenen Grenzwert, d.h. die Restzeit, bis der statistische Trend den Grenzwert unterschreitet.

Es wurde bereits vorstehend erwähnt, dass eine Erfindungsvariante die Möglichkeit bietet, einen Fehlerfall des Druckluftsystems in dem überdruckgekapselten Gerätegehäuse zu erkennen. Hierzu kann die Auswertungseinheit den zeitlichen Verlauf der gemessenen Fluidgröße (z.B. Volumenstrom durch den Gehäuseauslass) auswerten und mit bekannten, fehlertypischen Formen des zeitlichen Verlaufs vergleichen, um einen Fehlerfall des Druckluftsystems von einem normalen Betriebszustand des Druckluftsystems zu unterscheiden. Darüber hinaus ermöglicht diese Mustererkennung in dem zeitlichen Verlauf der gemessenen Fluidgröße (z.B. Volumenstrom durch den Gehäuseauslass) auch eine Unterscheidung verschiedener Fehlerfälle des Druckluftsystems.

So kann die Auswertungseinheit beispielsweise folgende ordnungsgemäße Betriebszustände des Druckluftsystems und Fehlerfälle erkennen und voneinander unterscheiden:
- Entlüften eines Steuerventils des Druckluftsystems in das Gerätegehäuse hinein, wobei es sich um einen ordnungsgemäßen Betriebszustand handelt.
- Lösen oder Platzen eines Druckluftschlauchs des Druckluftsystems verbunden mit einem plötzlichen Druckluftaustritt aus dem Druckluftschlauch in das Gerätegehäuse, wobei es sich um einen ersten Fehlerfall des Druckluftsystems handelt.
- Undichtigkeit des Druckluftsystems verbunden mit einer kontinuierlichen Leckage aus dem Druckluftsystem in das Gerätegehäuse, wobei es sich um einen zweiten Fehlerfall handelt.

Das Entlüften eines Steuerventils als ordnungsgemäßer Betriebszustand äußert sich dann in einem plötzlichen Anstieg des Volumenstroms durch den Gehäuseauslass in die Umgebung, gefolgt von einem plötzlichen Abfall des Volumenstroms innerhalb einer bestimmten Zeitspanne. Der Druckluftstrom durch den Gehäuseauslass weist dann also nur einen kurzen "Peak" auf.

Das Lösen oder Platzen eines Druckluftschlauchs des Druckluftsystems äußert sich dagegen in einem plötzlichen Anstieg des Volumenstroms aus dem Gerätegehäuse, wobei der sprunghaft angestiegene Volumenstrom dann über einen bestimmten Zeitraum hoch bleibt.

Ferner kann die Auswertungseinheit eine kontinuierliche Leckage aus dem Druckluftsystem in das Gerätegehäuse annehmen, wenn der Volumenstrom aus dem Gerätegehäuse langsam und kontinuierlich ansteigt.

Die Erfindung beansprucht nicht nur Schutz für das vorstehend beschriebene erfindungsgemäße Überdruckkapselungssystem. Vielmehr beansprucht die Erfindung auch Schutz für ein entsprechendes Betriebsverfahren für ein solches Überdruckkapselungssystem.

Andere vorteilhafte Weiterbildungen der Erfindung sind in den Unteransprüchen gekennzeichnet oder werden nachstehend zusammen mit der Beschreibung des bevorzugten Ausführungsbeispiels anhand der Figuren näher erläutert. Es zeigen:
- Figur 1: eine schematische Darstellung eines erfindungsgemäßen Überdruckkapselungssystems für einen Lackierroboter,
- Figur 2: ein Diagramm zur Verdeutlichung des langsamen Abfalls des Innendrucks des überdruckgekapselten Gerätegehäuses bei einer beginnenden Leckage des Gerätegehäuses,
- Figur 3: ein Flussdiagramm zur Verdeutlichung der Berechnung der Restlaufzeit bei einer beginnenden Leckage des Gerätegehäuses,
- Figur 4: ein Diagramm zur Verdeutlichung des Volumenstroms aus dem Geräteauslass des Gerätegehäuses bei verschiedenen Betriebszuständen und Fehlerfällen, und
- Figur 5: ein Flussdiagramm zur Verdeutlichung der Erkennung und Unterscheidung verschiedener Betriebszustände des Druckluftsystems in Abhängigkeit von der gemessenen Fluidgröße.

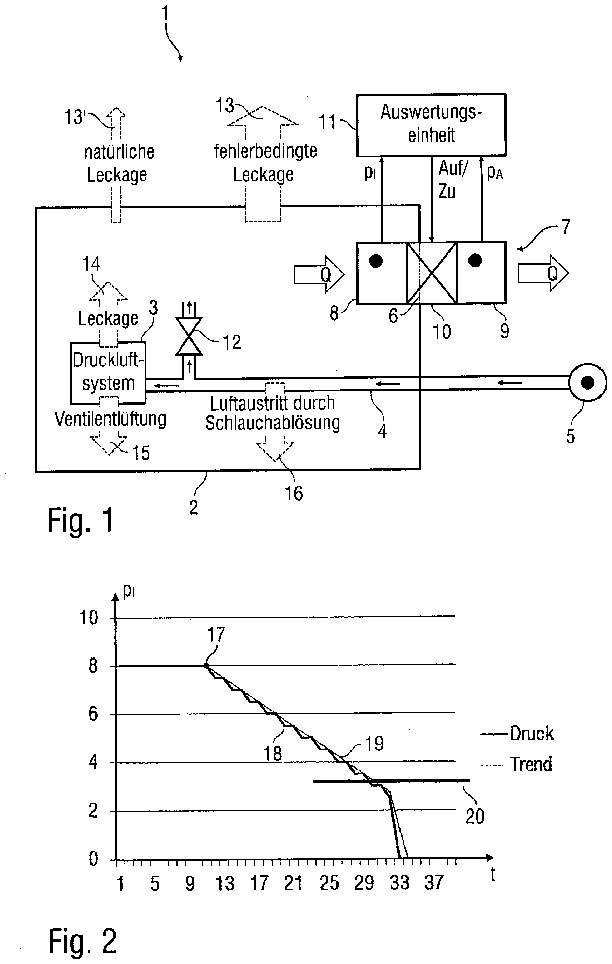

Figur 1 zeigt eine schematische Darstellung eines Überdrucckapselungssystems für einen Lackierroboter 1, wobei der Lackierroboter 1 nur schematisch dargestellt ist und ein überdruckgekapseltes Robotergehäuse 2 aufweist.

In dem überdruckgekapselten Robotergehäuse 2 befindet sich ein Druckluftsystem 3, das nur schematisch dargestellt ist und beispielsweise pneumatisch angesteuerte Beschichtungsmittelventile, Steuerventile zur Steuerung von Druckluftströmen und einen Druckluftschlauch 4 umfasst, wobei der Druckluftschlauch 4 von einer üblichen Druckluftversorgung 5 mit Druckluft gespeist wird. Hierbei ist zu erwähnen, dass das Druckluftsystem 3 zum Betrieb des Lackierroboters 1 erforderlich ist und somit selbst nicht dem Explosionsschutz dient.

In der Wandung des Robotergehäuses 2 befindet sich ein Gehäuseauslass 6, durch den ein Volumenstrom Q aus dem Innenraum des Robotergehäuses 2 entweichen kann.

In dem Gehäuseauslass 6 befindet sich eine Sensoranordnung 7, die einen Innendrucksensor 8 und einen Umgebungsdrucksensor 9 umfasst. Der Innendrucksensor 8 misst hierbei einen Innendruck p_{I} innerhalb des Robotergehäuses 2, während der Umgebungsdrucksensor 9 einen Umgebungsdruck p_{A} außerhalb des Robotergehäuses 2 misst.

Darüber hinaus umfasst die Sensoranordnung 7 noch ein steuerbares Spülventil 10, um den Volumenstrom Q aus dem Gehäuseauslass steuern zu können.

Die Sensoranordnung 7 ist mit einer Auswertungseinheit 11 verbunden, die zum einen den gemessenen Innendruck p_{I} und den gemessenen Umgebungsdruck p_{A} aufnimmt und zum anderen das Spülventil 10 steuert.

Ferner umfasst das erfindungsgemäße Überdruckkapselungssystem in diesem Ausführungsbeispiel ein weiteres Spülventil 12, das es ermöglicht, Druckluft aus dem Druckluftschlauch 4 in den Innenraum des Robotergehäuses 2 einzuleiten, beispielsweise bei einem Spülvorgang.

Vor einem Betriebsbeginn erfolgt dann in der Regel ein Spülvorgang, wie es an sich aus dem Stand der Technik bekannt ist, um eine möglicherweise zündfähige Atmosphäre aus dem Innenraum des Robotergehäuses 2 zu entfernen. Hierzu werden die beiden Spülventile 10, 12 geöffnet, so dass die in dem Innenraum des Robotergehäuses 2 befindliche, möglicherweise zündfähige Atmosphäre verdrängt und durch den Gehäuseauslass 6 aus dem Robotergehäuse 2 herausgespült wird. Bei diesem Spülvorgang berechnet die Auswertungseinheit 11 aus dem Innendruck p_{I} und dem Umgebungsdruck p_{A} den Volumenstrom Q durch den Gehäuseauslass 6 und führt den Spülvorgang solange fort, bis sichergestellt ist, dass eine möglicherweise zündfähige Atmosphäre aus dem Innenraum des Robotergehäuses 2 entfernt ist.

Während des eigentlichen Betriebs des Lackierroboters kann dann das Spülventil 12 geschlossen werden. Das Spülventil 10 kann dagegen wahlweise offenbleiben oder geschlossen werden, da verschiedene Betriebsweisen im Rahmen der Erfindung möglich sind.

Hierbei ist zu bemerken, dass das Spülventil 10 in der Regel federbelastet ist, so dass die Öffnung des Spülventils 10 durch mechanische Federkraft vorgegeben ist. Die Bezeichnung als Spülventil ist deshalb etwas missverständlich, da es sich eigentlich um eine Drossel oder eine Art Rückschlagventil handelt. Es gibt nur das Spülventil 12, das dazu dient, aktiv Luft in den Roboter einzuleiten. Das Spülventil 10 dient dagegen als Drossel und öffnet nur dann, wenn der Innendruck zu hoch wird.

In dem Betrieb des Lackierroboters können dann verschiedene Ereignisse auftreten, die in der Zeichnung durch gestrichelte Blockpfeile 13, 14, 15, 16 dargestellt sind.

Der Blockpfeil 13 symbolisiert hierbei eine fehlerbedingte Leckage des überdruckgekapselten Robotergehäuses 2. Diese Leckage des Robotergehäuses 2 führt zu einem Abfall des Innendrucks p_{I}, wie in Figur 2 dargestellt ist. Die Leckage beginnt hierbei an einem Punkt 17 und setzt sich mit einem zeitlichen Verlauf 18 fort, wobei der Innendruck p_{I} einem statistischen Trend 19 folgt. Hierbei ist zu erwähnen, dass die Leckage 13 fehlerbedingt ist und beispielsweise durch einen Verschleiß von Dichtungen oder durch eine falsche Montage von Deckeln und Hauben verursacht werden kann.

Davon zu unterscheiden ist eine natürliche Leckage 13', die sich auch bei einer guten Abdichtung nicht vollständig vermeiden lässt und in geringem Maße zwangsläufig auftritt. Bei einem solchen, nicht ideal gekapselten System mit der natürlichen Leckage 13' wird durch Zufuhr einer geringen Menge Luft (fixe Einstellung) der Druckabfall verhindert.

Die Auswertungseinheit 11 berechnet dann bei der fehlerbedingten Leckage 13 aus dem zeitlichen Verlauf 18 des Innendrucks pi zunächst den statistischen Trend 19. Anschließend berechnet die Auswertungseinheit 11 den Zeitpunkt, zu dem der statistische Trend 19 einen Grenzwert 20 unterschreitet. Schließlich berechnet die Auswertungseinheit 11 dann die Restlaufzeit bis zum Unterschreiten des Grenzwertes 20. Die Auswertungseinheit 11 kann auf diese Weise bei der Leckage 13 des Robotergehäuses 2 frühzeitig vor einer notwendigen Wartungsmaßnahme oder einem Systemausfall berechnen, wieviel Zeit noch bis zu der Wartungsmaßnahme bzw. bis zu dem Systemausfall verbleibt. Auf diese Weise können bei einer beginnenden Leckage des Robotergehäuses 2 notwendige Wartungsmaßnahmen relativ problemlos in den normalen Betriebsablauf eingetaktet werden.

Weiterhin ist zu erwähnen, dass im Falle dessen, dass der Betreiber die Warnung ignoriert, dennoch über eine gewisse Zeit hinweg der Betrieb aufrecht erhalt werden kann, wenn das Überdruckkapselungssystem über ein Spülventil mit großer Menge und ein zweites Ventil oder einen Bypass mit geringer Menge verfügt. Der Roboter wird dann über Zweipunktregelung am Leben erhalten.

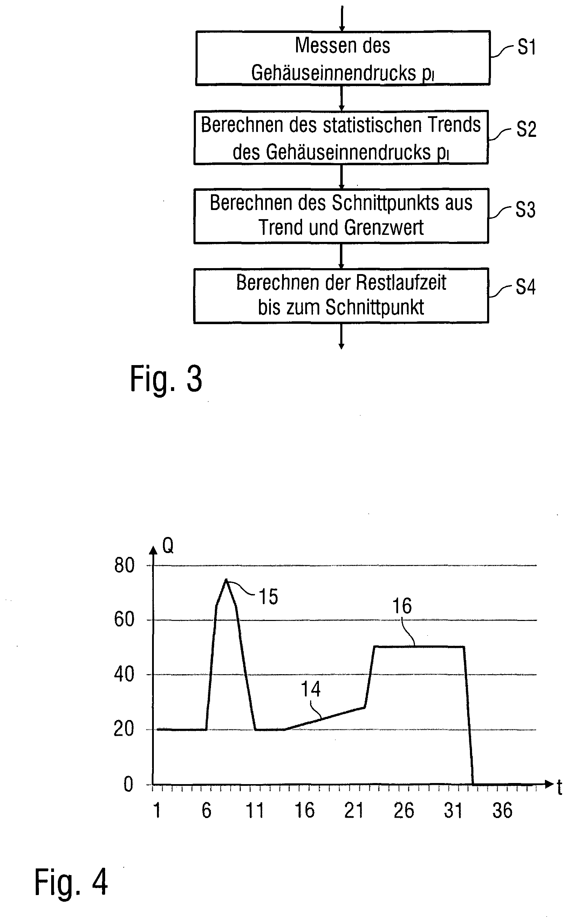

Der Blockpfeil 15 zeigt dagegen eine Ventilentlüftung eines Steuerventils des Druckluftsystems 3 in den Innenraum des Robotergehäuses 2. Hierbei handelt es sich nicht um einen Fehlerfall, sondern um ein ordnungsgemäßes Betriebsereignis, das keine Maßnahmen erfordert. Zur Erkennung einer solchen Ventilentlüftung 15 berücksichtigt die Auswertungseinheit 11 den Volumenstrom Q aus dem Gehäuseauslass 6. Die Ventilentlüftung 15 führt dabei zu einem plötzlichen Anstieg des Volumenstroms Q, gefolgt von einem ebenso plötzlichen Abfall des Volumenstroms Q, wie in Figur 4 dargestellt ist.

Der Blockpfeil 14 in der Zeichnung symbolisiert dagegen eine kontinuierliche Leckage aus dem Druckluftsystem 3 in das Robotergehäuse 2, was zu einem kontinuierlichen Anstieg des Volumenstroms Q aus dem Geräteauslass 6 führt, wie in Figur 4 dargestellt ist.

Der Blockpfeil 16 symbolisiert dagegen einen plötzlichen Luftaustritt aus dem Druckluftschlauch 4 in das Robotergehäuse 2, verursacht durch ein Bersten oder ein Ablösen des Druckluftschlauchs 4. Dies führt zu einem plötzlichen Anstieg des Volumenstroms Q, der über einen bestimmten Zeitraum erhalten bleibt und nicht wieder abfällt, wie in Figur 4 dargestellt ist.

Figur 3 zeigt die verschiedenen Schritte, welche die Auswertungseinheit 11 ausführt, um bei der Leckage 13 aus dem Robotergehäuse 2 die Restlaufzeit zu berechnen.

In einem ersten Schritt S1 wird zunächst mittels des Innendrucksensors 8 der Innendruck p_{I} in dem Robotergehäuse 2 gemessen.

In einem zweiten Schritt S2 wird dann der statistische Trend 19 des Innendrucks p_{I} gemessen.

In einem weiteren Schritt S3 wird dann der Schnittpunkt des Trends 19 mit dem Grenzwert 20 berechnet.

Schließlich berechnet die Auswertungseinheit 11 dann in einem Schritt S4 die Restlaufzeit bis zu dem Schnittpunkt, d.h. bis zu einer notwendigen Wartungsmaßnahme oder einem Systemausfall.

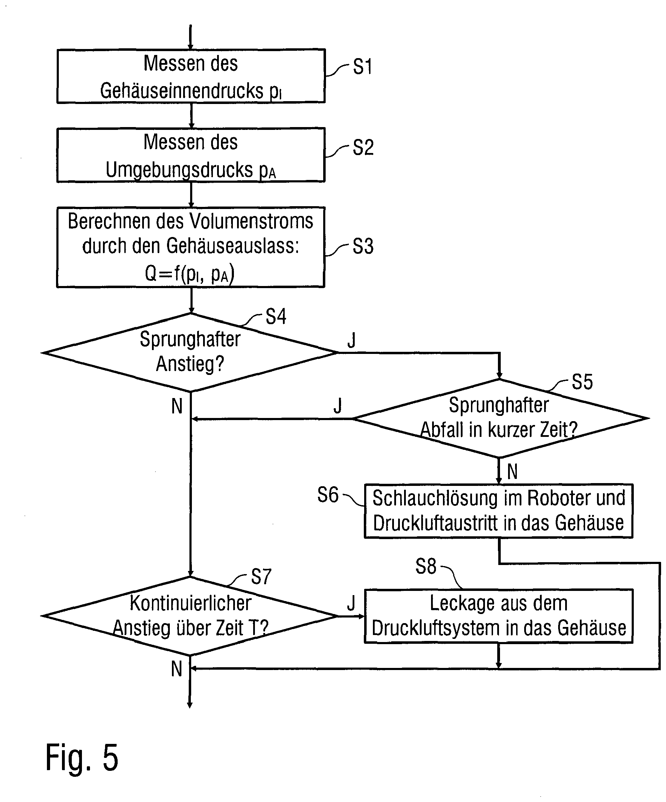

Figur 5 zeigt dagegen die Schritte, welche die Auswertungseinheit 11 ausführt, um die vorstehend beschriebenen Ereignisse voneinander zu unterscheiden, nämlich die Leckage 14 aus dem Druckluftsystem 3, die Ventilentlüftung 15 aus dem Druckluftsystem 3 und die Schlauchablösung 16.

In einem ersten Schritt S1 wird hierzu der Innendruck p_{I} innerhalb des Robotergehäuses 2 gemessen.

In einem zweiten Schritt S2 wird dann laufend der Umgebungsdruck p_{A} außerhalb des Robotergehäuses gemessen.

In einem weiteren Schritt S3 berechnet die Auswertungseinheit dann aus dem gemessenen Innendruck p_{I} und dem gemessenen Umgebungsdruck p_{A} den Volumenstrom Q durch den Gehäuseauslass 6.

Alternativ besteht auch die Möglichkeit, dass der Volumenstrom Q direkt durch einen Volumenstromsensor gemessen wird, der jedoch in den Zeichnungen nicht dargestellt ist.

In einem Schritt S4 wird dann zunächst geprüft, ob der Volumenstrom Q sprunghaft ansteigt, wie es beispielsweise bei der Ventilentlüftung 15 oder bei der Schlauchablösung 16 der Fall ist. Falls dies der Fall ist, so wird in einem Schritt S5 geprüft, ob der Volumenstrom wieder sprunghaft abfällt, was auf die Ventilentlüftung 15 hindeutet.

Falls diese Überprüfung jedoch ergibt, dass der Volumenstrom innerhalb kurzer Zeit nicht wieder abfällt, so wird in einem Schritt S6 erkannt, dass sich der Druckluftschlauch 4 gelöst hat oder geborsten ist.

Falls dagegen in dem Schritt S4 festgestellt wird, dass kein sprunghafter Anstieg des Volumenstroms erfolgt, so wird in einem Schritt S7 geprüft, ob der Volumenstrom Q über einen längeren Zeitraum kontinuierlich ansteigt, was auf die Leckage 14 des Druckluftsystems 3 hindeutet.

Gegebenenfalls wird dann in einem Schritt S8 erkannt, dass eine Leckage aus dem Druckluftsystem 3 in das Robotergehäuse 2 erfolgt.

Die vorstehenden Schritte gemäß den Figuren 3 und 5 können im laufenden Betrieb kontinuierlich wiederholt werden, um den Betrieb zu überwachen.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den jeweils in Bezug genommenen Ansprüchen.

### Bezugszeichenliste:

- 1: Lackierroboter
- 2: Überdruckgekapseltes Robotergehäuse
- 3: Druckluftsystem in dem Robotergehäuse
- 4: Druckluftschlauch zum Druckluftsystem
- 5: Druckluftversorgung
- 6: Gehäuseauslass des Robotergehäuses
- 7: Sensoranordnung
- 8: Innendrucksensor
- 9: Umgebungsdrucksensor
- 10: Spülventil in dem Gehäuseauslass
- 11: Auswertungseinheit
- 12: Spülventil am Druckluftschlauch
- 13: Fehlerbedingte Leckage aus dem Robotergehäuse in die Umgebung
- 13': Natürliche Leckage aus dem Robotergehäuse in die Umgebung
- 14: Leckage aus dem Druckluftsystem in das Robotergehäuse
- 15: Ventilentlüftung aus dem Druckluftsystem in das Robotergehäuse
- 16: Sprunghafter Luftaustritt aus dem Druckluftschlauch beim Bersten oder Ablösen des Druckluftschlauchs
- 17: Beginn der Leckage des Robotergehäuses
- 18: Zeitlicher Verlauf des Innendrucks p_{I} bei einer beginnenden Leckage aus dem Robotergehäuse in die Umgebung
- 19: Statistischer Trend des Innendrucks p_{I}
- 20: Grenzwert des Innendrucks
- p_{I}: Innendruck
- p_{A}: Umgebungsdruck
- Q: Volumenstrom aus dem Gehäuseauslass

## Patentansprüche

1. Überdruckkapselungssystem zum Explosionsschutz, insbesondere in einer Lackieranlage zur Lackierung von Kraftfahrzeugkarosseriebauteilen, mit
a) einem Gerät (1), insbesondere einem Lackierroboter (1),
b) einem Gerätegehäuse (2) mit einer Überdruckkapselung zur Erzielung eines Explosionsschutzes für das Gerät (1), insbesondere gemäß DIN EN 60079-2,
c) einem Gehäuseauslass (6) in dem Gerätegehäuse (2) zur Ableitung von Gas aus dem Gerätegehäuse (2) durch den Gehäuseauslass (6) in eine Umgebung,
d) einem Druckluftsystem (3, 4) zum Betrieb des Geräts (1) mittels Druckluft, wobei das Druckluftsystem (3, 4) mindestens teilweise innerhalb des überdruckgekapselten Gerätegehäuses (2) angeordnet ist,
e) einer Sensoranordnung (7, 8, 9) zur Messung mindestens einer Fluidgröße (Q, p_{I}, p_{A}) in dem Gerätegehäuse (2), an dem Gehäuseauslass (6) und/oder in der Umgebung, und
f) einer Auswertungseinheit (11), die eingangsseitig mit der Sensoranordnung (7, 8, 9) verbunden ist und die von der Sensoranordnung (7, 8, 9) gemessene Fluidgröße (Q, p_{I}, p_{A}) auswertet, insbesondere zur Erkennung einer Leckage (13) des Gerätegehäuses (2),
**dadurch gekennzeichnet,**
g) dass die Auswertungseinheit (11) bei einer beginnenden Leckage (13) des Gerätegehäuses (2) in Abhängigkeit von der gemessenen Fluidgröße (Q, p_{I}, p_{A}) eine Restlaufzeit bis zu einer erforderlichen Wartungsmaßnahme oder bis zu einem Systemausfall ermittelt, und/oder
h) dass die Auswertungseinheit (11) in Abhängigkeit von der gemessenen Fluidgröße (Q, p_{I}, p_{A}) einen Fehler (14, 16) des Druckluftsystems (3, 4) erkennt.

2. Überdruckkapselungssystem nach Anspruch 1, **dadurch gekennzeichnet, dass** die Auswertungseinheit (11) den Volumenstrom (Q) des Gases durch den Gehäuseauslass (6) als die auszuwertende Fluidgröße (Q) für die Ermittlung der Restlaufzeit und/oder für die Erkennung eines Fehlers (14, 16) des "Druckluftsystems (3, 4) berücksichtigt.

3. Überdruckkapselungssystem nach Anspruch 2, **dadurch gekennzeichnet, dass** die Sensoranordnung (7, 8, 9) folgendes aufweist:
a) einen Innendrucksensor (8), der den Innendruck (p_{I}) innerhalb des Gerätegehäuses (2) misst, und
b) einen Umgebungsdrucksensor (9), der den Umgebungsdruck (p_{A}) außerhalb des Gerätegehäuses (2) misst,
c) wobei die Auswertungseinheit (11) aus dem gemessenen Innendruck (p_{I}) und dem gemessenen Umgebungsdruck (p_{A}) den Volumenstrom (Q) des Gases durch den Gehäuseauslass (6) berechnet.

4. Überdruckkapselungssystem nach Anspruch 1, **dadurch gekennzeichnet, dass** die Sensoranordnung (7, 8, 9) einen Volumenstromsensor aufweist, der den Volumenstrom (Q) des Gases durch den Gehäuseauslass (6) misst.

5. Überdruckkapselungssystem nach einem der vorhergehenden Ansprüche, **dadurch gekennzeichnet, dass** die Sensoranordnung (7, 8, 9) ein quantitatives Sensorsignal (p_{I}, p_{A}) der mindestens einen gemessenen Fluidgröße (Q, p_{I}, p_{A}) ausgibt.

6. Überdruckkapselungssystem nach einem der vorhergehenden Ansprüche, **dadurch gekennzeichnet, dass** in dem Gehäuseauslass (6) ein Ventil (10) angeordnet ist, insbesondere ein steuerbares oder nicht steuerbares Absperrventil (10).

7. Überdruckkapselungssystem nach einem der vorhergehenden Ansprüche, **dadurch gekennzeichnet,**
a) **dass** die Fluidgröße (p_{I}) bei einer Leckage (13) einem vorgegebenen zeitlichen Verlauf (18) folgt, der in der Auswertungseinheit (11) hinterlegt ist,
b) **dass** die Auswertungseinheit (11) den zeitlichen Verlauf (18) der gemessenen Fluidgröße misst,
c) **dass** die Auswertungseinheit (11) aus dem hinterlegten zeitlichen Verlauf und dem gemessenen zeitlichen Verlauf (18) die Restlaufzeit bis zu der Wartungsmaßnahme oder bis zu dem Systemausfall berechnet.

8. Überdruckkapselungssystem nach einem der vorhergehenden Ansprüche, **dadurch gekennzeichnet,**
a) **dass** die Auswertungseinheit (11) einen statistischen Trend (19) der gemessenen Fluidgröße berechnet,
b) **dass** die Auswertungseinheit (11) einen Schnittpunkt berechnet zwischen dem statistischen Trend (19) der gemessenen Fluidgröße (p_{I}) und einem vorgegeben Grenzwert (20) für die Fluidgröße (p_{I}), und
c) **dass** die Auswertungseinheit (11) die Restlaufzeit bis zu dem Schnittpunkt berechnet.

9. Überdruckkapselungssystem nach einem der vorhergehenden Ansprüche, **dadurch gekennzeichnet,**
a) **dass** die Auswertungseinheit (11) den zeitlichen Verlauf der gemessenen Fluidgröße (Q) misst,
b) **dass** die Auswertungseinheit (11) die Form des zeitlichen Verlaufs der gemessenen Fluidgröße (Q) auswertet, um einen Fehlerfall (14, 16) des Druckluftsystems (3, 4) von einem normalen Betriebszustand (15) des Druckluftsystems (3, 4) zu unterscheiden.

10. Überdruckkapselungssystem nach einem der vorhergehenden Ansprüche, **dadurch gekennzeichnet, dass** die Auswertungseinheit (11) in Abhängigkeit von der gemessenen Fluidgröße (Q) folgende Fehlerfälle (14, 16) und ordnungsgemäßen Betriebszustände (15) des Druckluftsystems (3, 4) des Geräts (1) erkennt und voneinander unterscheidet:
a) Entlüften eines Steuerventils des Druckluftsystems (3, 4) als ordnungsgemäßer Betriebszustand (15),
b) Lösen oder Platzen eines Druckluftschlauchs (4) des Druckluftsystems (3, 4) als erster Fehlerfall (16) verbunden mit einem plötzlichen Druckluftaustritt aus dem Druckluftschlauch (4) in das Gerätegehäuse (2), und
c) Undichtigkeit des Druckluftsystems (3, 4) als zweiter Fehlerfall (14) verbunden mit einer kontinuierlichen Leckage (13) aus dem Druckluftsystem (3, 4) in das Gerätegehäuse (2).

11. Überdruckkapselungssystem nach Anspruch 10,
**dadurch gekennzeichnet,**
a) **dass** die Auswertungseinheit (11) den ordnungsgemäßen Betriebszustand (15) des Druckluftsystems (3, 4) annimmt, wenn der Volumenstrom (Q) aus dem Gerätegehäuse (2) sprunghaft ansteigt und dann wieder sprunghaft abfällt, und/oder
b) **dass** die Auswertungseinheit (11) den ersten Fehlerfall (16) des Druckluftsystems (3, 4) annimmt, wenn der Volumenstrom (Q) aus dem Gerätegehäuse (2) sprunghaft ansteigt und dann über einen vorgegebenen Zeitraum nicht wieder abfällt, und/oder
c) **dass** die Auswertungseinheit (11) den zweiten Fehlerfall (14) des Druckluftsystems (3, 4) annimmt, wenn der Volumenstrom (Q) aus dem Gerätegehäuse (2) kontinuierlich ansteigt.

12. Überdruckkapselungssystem nach einem der vorhergehenden Ansprüche, **dadurch gekennzeichnet, dass** das Druckluftsystem (3, 4) des Geräts (1) mindestens eines der folgenden Bauteile enthält:
a) ein pneumatisch angesteuertes Beschichtungsmittelventil zur Steuerung eines Beschichtungsmittelstroms,
b) ein Steuerventil zur Steuerung eines Druckluftstroms, insbesondere zur Ansteuerung des Beschichtungsmittelventils,
c) eine Druckluftleitung (4) zur Durchleitung eines Druckluftstroms, insbesondere als Druckluftschlauch (4).

13. Betriebsverfahren für ein Überdruckkapselungssystem, insbesondere für ein Überdruckkapselungssystem nach einem der vorhergehenden Ansprüche, mit den folgenden Schritten:
a) Betrieb eines Gerätes (1) mittels eines Druckluftsystems (3, 4), das mindestens teilweise in einem Innenraum eines überdruckgekapselten Gerätegehäuses (2) des Geräts (1) angeordnet ist, wobei das Gerätegehäuse (2) einen Gehäuseauslass (6) aufweist,
b) Druckbeaufschlagung des Innenraumes des Gerätegehäuses (2) des Gerätes (1),
c) Messen einer Fluidgröße (Q, p_{I}, p_{A}) in dem Gerätegehäuse (2), an dem Gehäuseauslass (6) und/oder in der Umgebung, und
d) Auswerten der gemessenen Fluidgröße (Q, p_{I}, p_{A}), insbesondere zur Erkennung einer Leckage (13),
**gekennzeichnet durch** folgende Schritte:
e) Ermitteln einer Restlaufzeit bis zu einer erforderlichen Wartungsmaßnahme oder bis zu einem Systemausfall bei einer beginnenden Leckage (13) aus dem Gerätegehäuse (2) in Abhängigkeit von der gemessenen Fluidgröße, und/oder
f) Detektion eines Fehlers (14, 16) des Druckluftsystems (3, 4) in Abhängigkeit von der gemessenen Fluidgröße (Q, p_{I}, p_{A}) .

## Claims

1. Overpressure encapsulation system for explosion protection, in particular in a painting installation for the painting of motor vehicle body components, comprising the following:
a) a device (1), in particular a painting robot (1),
b) an overpressure-encapsulated device housing (2) for explosion protection for the device (1), in particular in accordance with DIN EN 60079-2,
c) a housing outlet (6) in the device housing (2) for discharging gas out of the device housing (2) through the housing outlet (6) into a surrounding atmosphere,
d) a compressed air system (3, 4) for operating the device (1) by means of compressed air, said compressed air system (3, 4) being arranged at least partially inside the overpressure-encapsulated device housing (2),
e) a sensor assembly (7, 8, 9) for measuring at least one fluid variable (Q, p_{I}, p_{A}) in the device housing (2), at the housing outlet (6) and/or in the surrounding atmosphere, and
f) an analysis unit (11), which is connected to the sensor assembly (7, 8, 9) on the inlet side and analyzes the fluid variable (Q, p_{I}, p_{A}) measured by the sensor assembly (7, 8, 9), in particular in order to detect a leakage (13) of the device housing (2),
**characterized in that,**
g) when a leakage (13) of the device housing (2) starts, the analysis unit (11) ascertains a remaining runtime until a required maintenance operation or until a system failure on the basis of the measured fluid variable (Q, P_{I}, P_{A}), and/or
h) the analysis unit (11) detects a fault (14, 16) of the compressed air system (3, 4) on the basis of the measured fluid variable (Q, p_{I}, p_{A}) .

2. Overpressure encapsulation system according to claim 1, **characterized in that,** the analysis unit (11) considers the flow volume (Q) of the gas through the housing outlet (6) as the fluid variable (Q) to be analyzed for ascertaining the remaining runtime and/or detecting a fault (14, 16) of the compressed air system (3, 4).

3. Overpressure encapsulation system according to claim 2, **characterized in that,** the sensor assembly (7, 8, 9) comprises the following:
a) an internal pressure sensor (8), which measures the internal pressure (p_{I}) inside the device housing (2), and
b) an ambient pressure sensor (9), which measures the ambient pressure (p_{A}) outside the device housing (2),
c) wherein the analysis unit (11) calculates the flow volume (Q) of the gas through the housing outlet (6) from the measured internal pressure (p_{I}) and the measured ambient pressure (p_{A}) ,

4. Overpressure encapsulation system according to claim 1, **characterized in that,** the sensor assembly (7, 8, 9) comprises a flow volume sensor, which measures the flow volume (Q) of the gas through the housing outlet (6).

5. Overpressure encapsulation system according to any of the preceding claims, **characterized in that,** the sensor assembly (7, 8, 9) emits a quantitative sensor signal (p_{I}, p_{A}) of the at least one measured fluid variable (Q, p_{I}, p_{A}).

6. Overpressure encapsulation system according to any of the preceding claims, **characterized in that** a valve (10), in particular a controllable or non-controllable shut-off valve (10) is arranged in the housing outlet (6).

7. Overpressure encapsulation system according to any of the preceding claims, **characterized in that**
a) in a leakage (13), the fluid variable follows a predetermined temporal course (18), which is stored in the analysis unit (11),
b) the analysis unit (11) measures the temporal course (18) of the measured fluid variable,
c) from the stored temporal course and the measured temporal course (18), the analysis unit (11) calculates the remaining runtime until a required maintenance operation or until a system failure.

8. Overpressure encapsulation system according to any of the preceding claims, **characterized in that**
b) the analysis unit (11) calculates a statistical trend (19) of the measured fluid variable,
b) the analysis unit (11) calculates an intersect point between the statistical trend (19) of the measured fluid variable (p_{I}) and a predetermined threshold value (20) for the fluid variable (p_{I}), and
c) the analysis unit (11) calculates the remaining runtime before the intersect point is reached.

9. Overpressure encapsulation system according to any of the preceding claims, **characterized in that**
b) the analysis unit (11) measures the temporal course of the measured fluid variable (Q),
b) the analysis unit (11) analyzes the shape of the temporal course of the measured fluid variable (Q), in order to distinguish a fault case (14, 16) of the compressed air system (3, 4) from a normal operating state (15) of the compressed air system (3, 4).

10. Overpressure encapsulation system according to any of the preceding claims, **characterized in that** on the basis of the measured fluid variable (Q), the analysis unit (11) detects and distinguishes between the following fault cases (14, 16) and normal operating conditions (15) of the compressed air system (3, 4) of the device (1):
a) venting of a control valve of the compressed air system (3, 4) as a normal operating condition (15),
b) detachment or bursting of a compressed air tube (4) of the compressed air system (3, 4) as a first fault case (16) associated with a sudden escape of compressed air out of the compressed air tube (4) into the device housing (2), and
c) loss of leak-tightness of the compressed air system (3, 4) as a second fault case (14) associated with a continuous leakage (13) out of the compressed air system (3, 4) into the device housing (2).

11. Overpressure encapsulation system according to claim 10, **characterized in that,**
a) the analysis unit (11) assumes the normal operating condition (15) of the compressed air system (3, 4), if the flow volume (Q) out of the device housing (2) increases suddenly and then suddenly decreases again, and/or
b) the analysis unit (11) assumes the first fault case (16) of the compressed air system (3, 4), if the flow volume (Q) out of the device housing (2) increases suddenly and fails to decrease again for a predetermined period, and/or
c) the analysis unit (11) assumes the second fault case (14) of the compressed air system (3, 4), if the flow volume (Q) out of the device housing (2) increases continuously.

12. Overpressure encapsulation system according to any of the preceding claims, **characterized in that** the compressed air system (3, 4) of the device (1) contains at least one of the following components:
a) a pneumatically controlled coating agent valve for controlling a coating agent flow,
b) a control valve for controlling a compressed air flow, in particular for controlling the coating agent valve,
c) a compressed air line (4) for conducting a compressed air flow, in particular a compressed air tube (4).

13. Operating method for a overpressure encapsulation system, in particular for an overpressure encapsulation system according to any of the preceding claims, comprising the following steps:
a) operation of a device (1) by means of a compressed air system (3, 4), that is at least partially arranged in an interior space of an overpressure-encapsulated device housing (2) of the device (1), wherein the device housing (2) comprises a housing outlet (6),
b) pressurizing the interior space of the device housing (2) of the device (1),
c) measuring a fluid variable (Q, p_{I}, p_{A}) in the device housing (2), at the housing outlet (6) and/or in the surrounding atmosphere, and
d) analyzing the measured fluid variable (Q, p_{I}, p_{A}), in particular in order to detect a leakage (13),
**characterized by** the following steps:
e) when a leakage (13) out of the device housing (2) starts, ascertaining a remaining runtime until a required maintenance operation or until a system failure on the basis of the measured fluid variable, and/or
f) detection of a fault (14, 16) of the compressed air system (3, 4) on the basis of the measured fluid variable (Q, p_{I}, p_{A}).

## Revendications

1. Système d'enveloppe à surpression pour la protection contre les explosions, plus particulièrement dans une installation de peinture pour la peinture de composants de carrosseries de véhicules automobiles, avec
a) un appareil (1), plus particulièrement un robot de peinture (1),
b) un boîtier d'appareil (2) avec une enveloppe à surpression afin d'obtenir une protection contre les explosions pour l'appareil (1), plus particulièrement selon DIN EN 60079-2 ;
c) une sortie de boîtier (6) dans le boîtier d'appareil (2) pour l'évacuation du gaz hors du boîtier d'appareil (2) à travers la sortie de boîtier (6) vers l'environnement,
d) un système d'air comprimé (3, 4) pour l'actionnement de l'appareil (1) au moyen d'air comprimé, le système d'air comprimé (3, 4) étant disposé au moins partiellement à l'intérieur du boîtier d'appareil (2) à enveloppe à surpression,
e) un dispositif de capteur (7, 8, 9) pour la mesure d'au moins une grandeur de fluide (Q, p_{I}, p_{A}) dans le boîtier d'appareil (2), au niveau de la sortie de boîtier (6) et/ou dans l'environnement et
f) une unité d'analyse (11) qui est reliée, côté entrée, avec le dispositif de capteur (7, 8, 9) et qui analyse la grandeur de fluide (Q, p_{I}, p_{A}) mesurée par le dispositif de capteur (7, 8, 9), plus particulièrement pour la détection d'une fuite (13) du boîtier d'appareil (2),
**caractérisé en ce que**
g) l'unité d'analyse (11) détermine, lors de l'apparition d'une fuite (13) du boîtier d'appareil (2), en fonction de la grandeur de fluide (Q, p_{I}, p_{A}) mesurée, un temps restant jusqu'à une mesure de maintenance nécessaire ou jusqu'à une panne du système et/ou
h) l'unité d'analyse (11) détecte, en fonction de la grandeur de fluide (Q, p_{I}, p_{A}) mesurée, une erreur (14, 16) du système d'air comprimé (3, 4).

2. Système d'enveloppe à surpression selon la revendication 1, **caractérisé en ce que** l'unité d'analyse (11) prend en compte le débit volumique (Q) du gaz à travers la sortie de boîtier (6) comme la grandeur de fluide (Q) déterminante pour la détermination du temps restant et/ou pour la détection d'une erreur (14, 16) du système d'air comprimé (3, 4).

3. Système d'enveloppe à surpression selon la revendication 2, **caractérisé en ce que** le dispositif de capteur (7, 8, 9) comprend ce qui suit :
a) un capteur de pression interne (8) qui mesure la pression interne (p_{I}) à l'intérieur du boîtier d'appareil (2) et
b) un capteur de pression ambiante (9), qui mesure la pression ambiante (p_{A}) à l'extérieur du boîtier d'appareil (2),
c) l'unité d'analyse (11) calculant, à partir de la pression interne (p_{I}) mesurée et de la pression ambiante (p_{A}) mesurée, le débit volumique (Q) du gaz à travers la sortie du boîtier (6).

4. Système d'enveloppe à surpression selon la revendication 1, **caractérisé en ce que** le dispositif de capteur (7, 8, 9) comprend un capteur de débit volumique qui mesure le débit volumique (Q) du gaz à travers la sortie du boîtier (6).

5. Système d'enveloppe à surpression selon l'une des revendications précédentes, **caractérisé en ce que** le dispositif de capteur (7, 8, 9) émet un signal de capteur quantitatif (p_{I}, p_{A}) de l'au moins une grandeur de fluide (Q, p_{I}, p_{A}) mesurée.

6. Système d'enveloppe à surpression selon l'une des revendications précédentes, **caractérisé en ce que**, dans la sortie du boîtier (6) est disposée une soupape (10), plus particulièrement une soupape d'arrêt (10) contrôlable ou non contrôlable.

7. Système d'enveloppe à surpression selon l'une des revendications précédentes, **caractérisé en ce que**
a) la grandeur de fluide (p_{I}) suit, lors d'une fuite (13), un tracé temporel (18) prédéterminé qui est enregistré dans l'unité d'analyse (11),
b) l'unité d'analyse (11) mesure le tracé temporel (18) de la grandeur de fluide mesurée,
c) l'unité d'analyse (11) calcule, à partir du tracé temporel enregistré et du tracé temporel mesuré (18), le temps restant jusqu'à la mesure de maintenance ou jusqu'à la panne du système.

8. Système d'enveloppe à surpression selon l'une des revendications précédentes, **caractérisé en ce que**
a) l'unité d'analyse (11) calcule une tendance statistique (19) de la grandeur de fluide,
b) l'unité d'analyse (11) calcule un point d'intersection entre la tendance statistique (19) de la grandeur de fluide (p_{I}) mesurée et une valeur limite (20) prédéterminée, pour la grandeur de fluide (p_{I}) et
c) l'unité d'analyse (11) calcule le temps restant jusqu'au point d'intersection.

9. Système d'enveloppe à surpression selon l'une des revendications précédentes, **caractérisé en ce que**
a) l'unité d'analyse (11) mesure le tracé temporel de la grandeur de fluide (Q) mesurée,
b) l'unité d'analyse (11) analyse la forme du tracé temporel de la grandeur de fluide (Q) mesurée, afin de différencier une erreur (14, 16) du système d'air comprimé (3, 4) d'un état de fonctionnement normal (15) du système d'air comprimé (3, 4).

10. Système d'enveloppe à surpression selon l'une des revendications précédentes, **caractérisé en ce que** l'unité d'analyse (11) détecte, en fonction de la grandeur de fluide (Q) mesurée, les erreurs (14, 16) suivantes et les états de fonctionnement normaux (15) suivants du système d'air comprimé (3, 4) de l'appareil (1) et les différencie entre eux :
a) ventilation d'une soupape de commande du système d'air comprimé (3, 4) en tant qu'état de fonctionnement normal (15),
b) débranchement ou éclatement d'un tuyau d'air comprimé (4) du système d'air comprimé (3, 4) en tant que premier cas d'erreur (16), lié à une sortie d'air comprimé soudaine hors du tuyau d'air comprimé (4) dans le boîtier d'appareil (2) et
c) défaut d'étanchéité du système d'air comprimé (3, 4) en tant que deuxième cas d'erreur (14) lié à une fuite (13) continuelle du système d'air comprimé (3, 4) vers le boîtier d'appareil (2).

11. Système d'enveloppe à surpression selon la revendication 10, **caractérisé en ce que**
a) l'unité d'analyse (11) reconnaît un état de fonctionnement normal (15) du système d'air comprimé (3, 4) lorsque le débit volumique (Q) hors du boîtier d'appareil (2) augmente brusquement puis diminue ensuite à nouveau brusquement et/ou
b) l'unité d'analyse (11) reconnaît le premier cas d'erreur (16) du système d'air comprimé (3, 4) lorsque le débit volumique (Q) hors du boîtier d'appareil (2) augmente brusquement puis ne diminue ensuite pas dans une période prédéterminée et/ou
c) l'unité d'analyse (11) reconnaît le deuxième cas d'erreur (14) du système d'air comprimé (3, 4) lorsque le débit volumique (Q) hors du boîtier d'appareil (2) augmente continuellement.

12. Système d'enveloppe à surpression selon l'une des revendications précédentes, **caractérisé en ce que** le système d'air comprimé (3, 4) de l'appareil (1) comprend au moins un des composants suivants :
a) une soupape de produit de revêtement pneumatique pour le contrôle d'un débit de produit de revêtement,
b) une soupape de commande pour le contrôle d'un débit d'air comprimé, plus particulièrement pour le contrôle de la soupape de produit de revêtement,
c) une conduite d'air comprimé (4) pour le passage d'un flux d'air comprimé, plus particulièrement sous la forme d'un tuyau d'air comprimé (4).

13. Procédé de fonctionnement pour un système à enveloppe à surpression, plus particulièrement pour un système à enveloppe à surpression selon l'une des revendications précédentes, avec les étapes suivantes :
a) actionnement d'un appareil (1) au moyen d'un système d'air comprimé (3, 4), qui est disposé au moins partiellement à l'intérieur du boîtier d'appareil (2) à enveloppe à surpression de l'appareil (1), le boîtier d'appareil (2) comprenant une sortie de boîtier (6),
b) sollicitation en pression de l'espace interne du boîtier d'appareil (2) de l'appareil (1),
c) mesure d'une grandeur de fluide (Q, p_{I}, p_{A}) dans le boîtier d'appareil (2), sau niveau de la sortie de boîtier (6) et/ou dans l'environnement et
d) analyse de la grandeur de fluide (Q, p_{I}, p_{A}) mesurée, plus particulièrement pour la détection d'une fuite (13),
**caractérisé par** les étapes suivantes :
e) détermination d'un temps restant jusqu'à une mesure de maintenance nécessaire ou jusqu'à une panne du système lors de l'apparition d'une fuite (13) hors du boîtier d'appareil (2) en fonction de la grandeur de fluide mesurée et/ou
f) détection d'une erreur (14, 16) du système d'air comprimé (3, 4) en fonction de la grandeur de fluide (Q, p_{I}, p_{A}) mesurée.
